# EUROPÄISCHE PATENTSCHRIFT

(11) **EP 3 758 989 B1**
(45) Veröffentlichungstag und Bekanntmachung des Hinweises auf die Patenterteilung: **28.12.2022**
(21) Anmeldenummer: 19700861.8
(22) Anmeldetag: 07.01.2019
(51) Int. Cl.: B60T 13/66, B60T 8/32

(54) **MEHRKREISIGES HYDRAULISCH OFFENES BREMSSYSTEM, INSBESONDERE FÜR EIN HOCHAUTOMATISIERTES ODER AUTONOMES FAHRZEUG**
MULTIPLE-CIRCUIT HYDRAULICALLY OPEN BRAKING SYSTEM, IN PARTICULAR FOR A HIGHLY AUTOMATED OR AUTONOMOUS VEHICLE
SYSTÈME DE FREINAGE HYDRAULIQUE OUVERT À CIRCUITS MULTIPLES, NOTAMMENT POUR VÉHICULE HAUTEMENT AUTOMATISÉ OU AUTONOME

(30) Priorität: 26.02.2018 DE 102018202885
(43) Veröffentlichungstag der Anmeldung: 06.01.2021
(73) Patentinhaber: Robert Bosch GmbH, 70442 Stuttgart (DE)
(72) Erfinder: FRIEDRICH, Thomas, 74379 Ingersheim (DE); DROTLEFF, Dirk, 71720 Oberstenfeld-Gronau (DE); KLEEMANN, Ralf, 71726 Benningen Am Neckar (DE); BRENNDOERFER, Daniel, 71638 Ludwigsburg (DE); HIENZ, Bernd, 71640 Ludwigsburg (DE)
(86) Internationale Anmeldenummer: PCT/EP2019/050241
(87) Internationale Veröffentlichungsnummer: WO 2019/161982

(56) Entgegenhaltungen:
- DE-A1-102010 042 990
- DE-A1-102014 225 958
- DE-A1-102016 201 261

## Beschreibung

Die Erfindung geht aus von einem mehrkreisigen hydraulisch offenen Bremssystem, insbesondere für ein hochautomatisiertes oder autonomes Fahrzeug, nach der Gattung des unabhängigen Patentanspruchs 1. Gegenstand der vorliegenden Erfindung ist auch ein Betriebsverfahren für ein solches mehrkreisiges hydraulisch offenes Bremssystem.

Aus dem Stand der Technik sind Fahrzeuge mit mindestens einer hochautomatisierten oder autonomen Fahrfunktion bekannt, welche zumindest teilweise eine tatsächliche Fahraufgabe übernehmen können. Dadurch können die Fahrzeuge hochautomatisiert oder autonom fahren, indem die Fahrzeuge beispielsweise den Straßenverlauf, andere Verkehrsteilnehmer oder Hindernisse selbständig erkennen und die entsprechenden Ansteuerbefehle im Fahrzeug berechnen sowie diese an die Aktuatoren im Fahrzeug weiterleitet, wodurch der Fahrverlauf des Fahrzeugs korrekt beeinflusst wird. Der Fahrer ist bei einem solchen hochautomatisierten oder autonomen Fahrzeug in der Regel nicht am Fahrgeschehen beteiligt. Trotzdem sind Maßnahmen und Mittel vorgesehen, die es dem Fahrer ermöglichen, jederzeit selbst in das Fahrgeschehen eingreifen zu können.

Zudem sind aus dem Stand der Technik Bremssysteme für Fahrzeuge bekannt, welche für eine Ansteuerung durch einen Fahrzeugführer mit einem hydraulischen Durchgriff ausgelegt sind. Dadurch ist bei Ausfall des Bremssystems gewährleistet, dass der Fahrer durch Betätigen des Bremspedals noch ausreichend Bremskraft auf die Räder des Fahrzeugs bringen kann. Diese Auslegung beeinflusst maßgeblich die Topologie heutiger Bremssysteme. So lässt sich beispielsweise die Größe eines Tandemhauptbremszylinders durch die Aufrechterhaltung einer guten Performance in der Rückfallebene begründen. Zudem können die Bremssysteme als sogenannte gekoppelte Bremssysteme oder Hilfskraftbremssysteme ausgeführt werden. Allerdings sind auch diese Systeme so realisiert, dass als Rückfallebene nach wie vor ein hydraulischer Durchgriff durch den Fahrer gegeben ist. Hilfskraftbremsanalagen sind für hochautomatisierte oder autonome Fahrzeuge ungeeignet, da dort während einer autonomen Fahrfunktion kein Fahrer mehr zum Verstärken da ist und das Bremssystem die Bremsenergie komplett selbstständig aufbauen muss.

Aus der DE 10 2009 001135 A1 ist ein Verfahren zur Betätigung einer hydraulischen Fahrzeugbremsanlage bekannt. Die Fahrzeugbremsanlage umfasst einen elektromechanischen Bremskraftverstärker und eine Radschlupfregelung. Hierbei wird die Fahrzeugbremsanlage mit dem Bremskraftverstärker in Situationen betätigt, bei denen ein Bremspedal nicht betätigt ist, beispielsweise zur Begrenzung einer Fahrzeuggeschwindigkeit oder einer Abstandsregelung zu einem vorausfahrenden Fahrzeug oder beim Einparken.

Aus der DE 10 2014 225 958 A1 ist ein gattungsgemäßes mehrkreisiges hydraulisch offenes Bremssystem für ein Kraftfahrzeug zur Betätigung von hydraulisch betätigbaren Radbremsen mit einer ersten elektrohydraulischen Steuer- und Regeleinheit und mit einer zweiten elektrohydraulischen Steuer- und Regeleinheit bekannt. Hierbei umfasst die erste elektrohydraulische Steuer- und Regeleinheit einen mittels eines Bremspedals betätigbaren Hauptbremszylinder, eine erste elektrisch steuerbare Druckbereitstellungseinrichtung und eine elektrisch steuerbare Druckmodulationseinrichtung zum Einstellen radindividueller Bremsdrücke für die Radbremsen mit zumindest einem elektrisch betätigbaren Einlassventil für jede Radbremse, wobei an der ersten elektrohydraulischen Steuer- und Regeleinheit ein erster Druckmittelvorratsbehälter zur Versorgung der ersten elektrohydraulischen Steuer- und Regeleinheit mit Druckmittel angeordnet ist. Die zweite elektrohydraulische Steuer- und Regeleinheit, umfasst eine zweite elektrisch steuerbare Druckbereitstellungseinrichtung zur Betätigung zumindest eines Teils der Radbremsen und elektrisch betätigbare Ventile, wobei ein zweiter Druckmittelvorratsbehälter zur Versorgung der zweiten elektrohydraulischen Steuer- und Regeleinheit mit Druckmittel vorgesehen ist, der an der zweiten elektrohydraulischen Steuer- und Regeleinheit angeordnet ist. Es sind zwei voneinander unabhängige elektrische Energieversorgungseinheiten vorgesehen. Hierbei wird die erste elektrohydraulische Steuer- und Regeleinheit von einer ersten Energieversorgungseinheit mit elektrischer Energie versorgt, und die zweite elektrohydraulische Steuer- und Regeleinheit wird von einer zweiten elektrischen Energieversorgungseinheit mit elektrischer Energie versorgt.

Aus der DE 10 2016 201 261 A1 ist ein Bremssystem für ein Kraftfahrzeug bekannt, welches eine erste Bremsenanordnung und eine zweite Bremsenanordnung umfasst. Ein erster hydraulischer Bremskreislauf ist mit der ersten Bremsenanordnung verbunden, und ein zweiter hydraulischer Bremskreislauf ist mit der zweiten Bremsenanordnung verbunden. Weiterhin ist ein erstes Steuermodul mit dem ersten hydraulischen Bremskreislauf und dem zweiten hydraulischen Bremskreislauf gekoppelt. Das erste Steuermodul ist dazu ausgebildet, einen Fluiddruck sowohl innerhalb des ersten hydraulischen Bremskreislaufs als auch innerhalb des zweiten hydraulischen Bremskreislaufs zu steuern. Ein zweites Steuermodul ist außerdem mit dem ersten hydraulischen Bremskreislauf und mit dem zweiten hydraulischen Bremskreislauf gekoppelt. Das zweite Steuermodul ist dazu ausgebildet, einen Fluiddruck sowohl innerhalb des ersten hydraulischen Bremskreislaufs als auch innerhalb des zweiten hydraulischen Bremskreislaufs unabhängig von dem ersten Steuermodul zu steuern. Das erste Steuermodul ist in Reihe mit dem zweiten Steuermodul in dem ersten und dem zweiten hydraulischen Bremskreislauf angeordnet. Zusätzlich sendet ein virtueller Fahrer einen Verzögerungswunsch an das erste Steuermodul und das zweite Steuermodul. Das erste Steuermodul und das zweite Steuermodul bestimmen einen gewünschten Druck auf Grundlage des Verzögerungswunsches. Das erste Bremssteuermodul steuert einen Fluiddruck sowohl innerhalb des ersten als auch des zweiten hydraulischen Bremskreislaufs, um den Verzögerungswunsch auszuführen. Das zweite Steuermodul überwacht einen Druck stromabwärts von dem ersten Steuermodul und vergleicht den überwachten Druck mit dem gewünschten Druck.

Aus der DE 10 2010 042 990 A1 ist ein gattungsgemäßes Verfahren zum Betreiben eines Bremssystems für ein Fahrzeug mit einem Hauptbremszylinder, mit einem zumindest teilweise in den Hauptbremszylinder hinein verstellbaren Hauptbremszylinder-Schwimmkolben und einer Bremsmedium-Speichervorrichtung, in welche ein vorgegebenes Speichervolumen eines Bremsmediums gegendruckfrei hinein transferierbar ist, mit den Schritten bekannt: Steigern eines Innendrucks in dem Hauptbremszylinder bei einem Verstellen des Hauptbremszylinder-Schwimmkolbens teilweise in den Hauptbremszylinder, um einen Verstellweg unter einem dem Speichervolumen entsprechenden Grenzverstellweg durch Schließen eines elektrisch steuerbaren ersten Ventils, über welches die Bremsmedium-Speichervorrichtung mit dem Hauptbremszylinder hydraulisch verbunden ist, und/oder Unterbinden einer Steigerung des Innendrucks in dem Hauptbremszylinder bei dem Verstellen des Hauptbremszylinder-Schwimmkolbens teilweise in den Hauptbremszylinder, um den Verstellweg unter dem Grenzverstellweg durch ein zumindest Teilöffnen des ersten Ventils, so dass ein Bremsmediumvolumen kleiner als das vorgegebene Speichervolumen gegendruckfrei aus dem Hauptbremszylinder über das zumindest teilweise geöffnete erste Ventil in die Bremsmedium-Speichervorrichtung transferiert wird.

### Offenbarung der Erfindung

Das mehrkreisige hydraulisch offene Bremssystem, insbesondere für ein hochautomatisiertes oder autonomes Fahrzeug, mit den Merkmalen des unabhängigen Patentanspruchs 1 und das korrespondierende Betriebsverfahren für ein solches mehrkreisiges hydraulisch offenes Bremssystem mit den Merkmalen des unabhängigen Patentanspruchs 15 haben den Vorteil, dass eine einfache, robuste und kostengünstige Bremssystemarchitektur ohne mechanischen und/oder hydraulischen Durchgriff über den Fahrer zur Verfügung gestellt wird, welche auch im Fehlerfall durch ein geeignetes Redundanzkonzept eine ausreichende Bremsperformance ermöglicht.

Ausführungsformen der Erfindung weisen weniger Komponenten als bekannte Bremssysteme auf, da weniger Ventile, kein Pedalwegsimulator, kein Mechanismus, um den Fahrerdruck zu erzeugen, zu verstärken und weiterzuleiten erforderlich sind, so dass geringere Bremssystemkosten entstehen. Zudem ergeben sich geringere Systemkosten, da an den Radbremsen nur ein hydraulischer Anschluss vorhanden ist und keine Alternativlösungen mit zwei Anschlüssen im Bremssattel erforderlich sind, die auf unterschiedliche Kolben wirken. Des Weiteren weist der Fluidbehälter nur einen hydraulischen Anschluss pro Bremskreis auf und Alternativlösungen mit mehreren Anschlüssen sind überflüssig.

Außerdem ergeben sich geringere Integrationskosten beim Fahrzeughersteller, da die Ausführungsformen der Erfindung aufgrund der elektrischen Ansteuerung ohne mechanischen und/oder hydraulischen Durchgriff über den Fahrer einen einfachen Einbau, insbesondere für Rechts- und Linkslenker, ermöglichen und Einbauraum an der Spritzwand zwischen Motorraum und Fahrzeuginnenraum freigeben. Da keiner der Bremssystemaktuatoren an der Spritzwand montiert sein muss, können sich auch NVH-Vorteile (NVH: Noise, Vibration, Harshness "Geräusch, Vibration, Rauigkeit") ergeben. Aufgrund der kleineren Anzahl von Komponenten ergibt sich zudem ein geringeres Gewicht und Volumen im Vergleich zu bekannten Bremssystemen.

Durch die Aufteilung in ein Hauptsystem und ein Sekundärsystem kann einfach ein modulares Konzept mit zwei Baugruppen umgesetzt werden.

Ausführungsformen der vorliegenden Erfindung stellen ein mehrkreisiges hydraulisch offenes Bremssystem, insbesondere für ein hochautomatisiertes oder autonomes Fahrzeug, mit mindestens zwei Radbremsen, welche jeweils einem Bremskreis mit einem Druckablasspfad zugeordnet sind, zwei mehrkreisigen Druckerzeugern, welche zwischen einem Fluidbehälter und den mindestens zwei Radbremsen hydraulisch in Reihe geschaltet sind, und einer Hydraulikeinheit zur hydraulischen Verbindung der Druckerzeuger mit den mindestens zwei Radbremsen und zur individuellen Bremsdruckmodulation in den mindestens zwei Radbremsen zur Verfügung. Hierbei ist ein erster Druckerzeuger als Plungersystem ausgeführt und einem Hauptsystem zugeordnet, welches eine erste Energieversorgung und eine erste Auswerte- und Steuereinheit umfasst. Ein zweiter Druckerzeuger ist als zweites Plungersystem oder als Pumpensystem ausgeführt und einem Sekundärsystem zugeordnet, welches eine von der ersten Energieversorgung unabhängige zweite Energieversorgung und eine zweite Auswerte- und Steuereinheit umfasst, welche den zweiten Druckerzeuger ansteuert. Zudem sind Komponenten der Hydraulikeinheit zur individuellen Bremsdruckmodulation dem Hauptsystem zugeordnet, so dass diese Komponenten der Hydraulikeinheit und der erste Druckerzeuger von der ersten Auswerte- und Steuereinheit angesteuert und von der ersten Energieversorgung mit Energie versorgt werden.

Zudem wird ein Betriebsverfahren für ein solches mehrkreisiges hydraulisch offenes Bremssystem, insbesondere für ein hochautomatisiertes oder autonomes Fahrzeug, vorgeschlagen. Im Normalbetrieb erhöht oder reduziert oder hält das Hauptsystem mittels des ersten Druckerzeugers den Druck in den Bremskreisen und führt mittels der Hydraulikeinheit die individuelle Bremsdruckmodulation in den mindestens zwei Radbremsen aus. Bei Ausfall des Hauptsystems erhöht oder reduziert oder hält das Sekundärsystem mittels des zweiten Druckerzeugers den Druck in den Bremskreisen und die individuelle Bremsdruckmodulation in den mindestens zwei Radbremsen entfällt.

Unter einem hydraulisch offenen Bremssystem, wird ein Bremssystem verstanden, bei welchem während einer individuellen Bremsdruckmodulation abgelassenes Bremsfluid aus den Radbremsen über einen Druckablasspfad zum Fluidbehälter zurückgeführt werden kann. Bei Ausführungsformen der vorliegenden Erfindung ist das Bremssystem im Normalbetrieb offen Bei Ausfall des Hauptsystems ist das Bremssystem geschlossen, so dass keine individuelle Bremsdruckmodulation der Radbremsen möglich ist.

Durch die individuelle Bremsdruckmodulation in den einzelnen Radbremsen können in vorteilhafter Weise verschiedene Regelfunktionen, wie beispielsweise eine Blockierschutzregelung ABS, eine Antriebsschlupfregelung ASR, eine Fahrdynamikregelung FDR bzw. ESP zur Längs- und Querstabilisierung des Fahrzeugs umgesetzt werden. Da diese Regelfunktionen an sich bekannt sind wird hier nicht näher auf diese eingegangen.

Durch die Ausführung des ersten Druckerzeugers als Plungersystem ergibt sich eine gute NVH-Performance im Gesamtsystem und ein einfacheres und/oder genaueres Monitoring und eine verbesserte Regelung. Dies ermöglicht, dass sowohl Lage als auch Volumen- und Druckaufbauinformationen im Hauptsystem in Vergleich zu anderen Konzepten (Pumpensystem) einfacher und insbesondere genauer erfasst werden können.

Durch die Ausführung des zweiten Druckerzeugers als Plungersystem ergibt sich sowohl im Normalbetrieb als auch bei Ausfall des Hauptsystems eine sehr gute NVH-Performance.

Durch die Ausführung des zweiten Druckerzeugers als Pumpensystem ergeben sich noch geringere Kosten, Bauraum und Gewicht im Vergleich zu anderen Konzepten (Plungersystem).

Unter der Auswerte- und Steuereinheit kann vorliegend ein elektrisches Gerät, wie beispielsweise ein Steuergerät verstanden werden, welches erfasste Sensorsignale verarbeitet bzw. auswertet. Die Auswerte- und Steuereinheit kann mindestens eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Auswerte- und Steuereinheit beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind. Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert ist und zur Durchführung der Auswertung verwendet wird, wenn das Programm von der Auswerte- und Steuereinheit ausgeführt wird.

Zur Erfassung der Sensorsignale sind Sensoreinheiten vorgesehen, unter welchen vorliegend Baugruppen verstanden werden, welche mindestens ein Sensorelement umfassen, welches eine physikalische Größe bzw. eine Änderung einer physikalischen Größe direkt oder indirekt erfasst und vorzugsweise in ein elektrisches Sensorsignal umwandelt. Dies kann beispielsweise über das Aussenden und/oder das Empfangen von Schallwellen und/oder elektromagnetischen Wellen und/oder über ein Magnetfeld bzw. die Änderung eines Magnetfelds und/oder das Empfangen von Satellitensignalen beispielsweise eines GPS-Signals erfolgen. Eine solche Sensoreinheit kann beispielsweise Beschleunigungssensorelemente, welche beschleunigungsrelevante Informationen des Fahrzeugs erfassen, und/oder Sensorelemente umfassen, welche Gegenstände und/oder Hindernisse und/oder andere crashrelevante Fahrzeugumfelddaten ermitteln und zur Auswertung zur Verfügung stellen. Solche Sensorelemente können beispielsweise auf Video- und/oder Radar- und/oder Lidar und/oder PMD- und/oder Ultraschall-Technologien basieren. Zudem können auch Signale und Informationen einer vorhandenen ABS-Sensorik und die im dafür vorgesehenen Steuergerät abgeleiteten Größen ausgewertet werden. Basierend auf den beschleunigungsrelevanten Informationen und/oder daraus ermittelten Größen können beispielsweise eine Fahrzeugbewegung und eine Fahrzeuglage im dreidimensionalen Raum geschätzt werden und zur Unfallerkennung ausgewertet werden.

Zur Positionsbestimmung des Fahrzeugs können beispielsweise globale Navigationssatellitensysteme GNSS (GNSS: Global Navigation Satellite System) eingesetzt werden. Hierbei wird GNSS als Sammelbegriff für die Verwendung bestehender und künftiger globaler Satellitensysteme wie NAVSTAR GPS (Global Positioning System) der Vereinigten Staaten von Amerika, GLONASS (Global Navigation Satellite System) der Russischen Föderation, Galileo der Europäischen Union, Beidou der Volksrepublik China usw. eingesetzt.

Unter einem hochautomatisierten oder autonomen Fahrzeug, wird ein Fahrzeug verstanden, welches mindestens eine hochautomatisierte oder autonome Fahrfunktion aufweist, welche zumindest teilweise eine tatsächliche Fahraufgabe übernehmen kann. Über diese mindestens eine hochautomatisierte oder autonome Fahrfunktion erkennt das Fahrzeug beispielsweise den Straßenverlauf, andere Verkehrsteilnehmer oder Hindernisse selbständig und berechnet die entsprechenden Ansteuerbefehle, welche an die Aktuatoren im Fahrzeug weiterleitet werden, wodurch der Fahrverlauf des Fahrzeugs korrekt beeinflusst wird. Der Fahrer ist bei einem solchen hochautomatisierten oder autonomen Fahrzeug in der Regel nicht am Fahrgeschehen beteiligt. Trotzdem sind Maßnahmen und Mittel, beispielsweise in Form von elektrischen oder elektronischen Betätigungselementen, vorgesehen, die es dem Fahrer ermöglichen, jederzeit selbst in das Fahrgeschehen eingreifen zu können. Der vom Fahrer mittels der Betätigungselemente erzeugte Bremswunsch wird dann über elektrische Signale an das Hauptsystem und/oder das Sekundärsystem weitergeleitet. Ein mechanischer und/oder hydraulischen Durchgriff durch den Fahrer ist jedoch nicht vorhanden. Die mindestens eine Fahrfunktion wertet zur Trajektorienplanung von internen Sensoreinheiten erfasste Fahrzeugdaten wie ABS-Eingriffe, Lenkwinkel, Position, Richtung, Geschwindigkeit, Beschleunigung usw. und/oder Fahrzeugumfelddaten aus, welche beispielsweise über Kamera-, Radar-, Lidar- und/oder Ultraschallsensoreinheiten erfasst werden, und steuert die Auswerte- und Steuereinheiten des Hauptsystems und des Sekundärsystems entsprechend an, um einen gewünschten Bremsdruck zu erzeugen und/oder Stabilisierungsvorgänge in Längs- und/oder Querrichtung durch individuelle Bremsdruckmodulation in den Radbremsen zu realisieren.

Durch die in den abhängigen Ansprüchen aufgeführten Maßnahmen und Weiterbildungen sind vorteilhafte Verbesserungen des im unabhängigen Patentanspruch 1 angegebenen mehrkreisigen hydraulisch offenen Bremssystems, insbesondere für ein hochautomatisiertes oder autonomes Fahrzeug, und des im unabhängigen Patentanspruch 15 angegebenen Betriebsverfahrens für ein solches mehrkreisiges hydraulisch offenes Bremssystem, insbesondere für ein hochautomatisiertes oder autonomes Fahrzeug, möglich.

Besonders vorteilhaft ist, dass die Reihenfolge der fluidisch in Reihe geschalteten Druckerzeuger ohne negative Auswirkungen auf die Funktionalität an die Einbaubedingungen angepasst werden kann. So kann beispielsweise nach dem Fluidbehälter zuerst der erste Druckerzeuger und dann der zweite Druckerzeuger angeordnet werden. Alternativ kann nach dem Fluidbehälter zuerst der zweite Druckerzeuger und dann der erste Druckerzeuger angeordnet werden.

In vorteilhafter Ausgestaltung des Bremssystems kann in den Bremskreisen jeweils parallel zum ersten Druckerzeuger und/oder zum zweiten Druckerzeuger ein hydraulischer By-Pass ausgebildet werden. Hierbei kann jeweils ein erstes Schaltventil den hydraulischen By-Pass in einem ersten Bremskreis um den ersten Druckerzeuger und/oder um den zweiten Druckerzeuger sperren oder freigeben und jeweils ein zweites Schaltventil kann den hydraulischen By-Pass in einem zweiten Bremskreis um den ersten Druckerzeuger und/oder um den zweiten Druckerzeuger sperren oder freigeben. Dadurch kann die Drosselung durch die Druckerzeuger in vorteilhafter Weise verhindert werden

In weiterer vorteilhafter Ausgestaltung des Bremssystems kann der Fluidbehälter eine erste Fluidkammer zur Fluidversorgung des ersten Bremskreises und eine zweite Fluidkammer zur Fluidversorgung des zweiten Bremskreises umfassen. Zudem können das erste Plungersystem und das zweite Plungersystem jeweils eine Kolben-Zylindereinheit mit zwei Kolben und zwei Kammern und mit einem Antrieb aufweisen. Hierbei kann der jeweilige Antrieb jeweils die beiden Kolben des korrespondierenden Plungersystems gegen die Kraft von korrespondierenden Rückstellfedern zur Druckeinstellung in den Kammern bewegen. Hierbei kann jeweils eine erste Kammer dem ersten Bremskreis und jeweils eine zweite Kammer dem zweiten Bremskreis zugeordnet werden, wobei die Kolben-Zylindereinheiten der Plungersysteme im stromlosen Zustand durchfließbar sind. So dass Bremsfluid im Wesentlichen ungehindert durch die Kolben-Zylindereinheiten fließen kann. Des Weiteren kann das Pumpensystem eine erste Pumpe, welche dem ersten Bremskreis zugeordnet ist, eine zweite Pumpe, welche dem zweiten Bremskreis zugeordnet ist, und einen gemeinsamen Antrieb aufweisen, welcher die beiden Pumpen antreiben. Dadurch kann bei Ausführungsformen der Erfindung in vorteilhafter Weise eine durchgängige Zweikreisigkeit vom Fluidbehälter bis zu den Radbremsen umgesetzt werden, so dass die Anforderungen an die Leckageüberwachung gesenkt werden können.

In weiterer vorteilhafter Ausgestaltung des Bremssystems kann die Hydraulikeinheit für jede Radbremse zur individuellen Bremsdruckmodulation jeweils ein Einlassventil und jeweils ein Auslassventil umfassen. Zudem kann die Hydraulikeinheit für das erste Plungersystem in jedem Bremskreis jeweils ein Absperrventil aufweisen, welches ein Nachladen von Bremsfluid aus dem Fluidbehälter ermöglicht. Aufgrund der offenen Architektur ist das erste Plungersystem in der Lage Fluid nachzuladen bzw. nachzuschnüffeln. Hierbei verhindern die Absperrventile in vorteilhafter Weise, dass das Plungersystem während des Nachladevorgangs Bremsfluid aus den Radbremsen ansaugt. Des Weiteren kann die Hydraulikeinheit für das erste Plungersystem in jedem Bremskreis jeweils eine Saugleitung mit Rückschlagventil aufweisen, welche das erste Plungersystem zusätzlich mit dem Fluidbehälter hydraulisch verbinden kann. Dadurch kann der Nachladevorgang insbesondere bei Tieftemperaturen schneller durchgeführt werden.

In weiterer vorteilhafter Ausgestaltung des Bremssystems kann die Hydraulikeinheit für das Pumpensystem in jedem Bremskreis jeweils ein Druckhalte- und Druckregelventil aufweisen, welche dem Sekundärsystem zugeordnet sind und von der zweiten Auswerte- und Steuereinheit angesteuert und von der zweiten Energieversorgung mit Energie versorgt werden können. Die Einlassventile und die Druckhalte- und Druckregelventile können beispielsweise als regelbare stromlos offene Magnetventile ausgeführt werden. Die Auslassventile und die Absperrventile können beispielsweise als elektromagnetische stromlos geschlossene Schaltventile ausgeführt werden. Durch diese Ausführung der Hydraulikeinheit ist es in vorteilhafter Weise möglich, bereits bekannte ESP-Systeme einzusetzen und über bereits existierenden Skaleneffekt (ESP wird millionenfach gebaut) sehr niedrige Gesamtsystemkosten zu erzielen. Des Weiteren kann eine erste Radbremse und eine zweite Radbremse dem ersten Bremskreis und eine dritte Radbremse und eine vierte Radbremse dem zweiten Bremskreis zugeordnet werden. Hierbei ist sowohl eine X-Aufteilung, d.h. die Radbremse des linken Vorderrads und die Radbremse des rechten Hinterrads sind dem ersten Bremskreis und die Radbremse des rechten Vorderrads und die Radbremse des linken Hinterrads sind dem zweiten Bremskreis zugeordnet, als auch eine II-Aufteilung der Bremskreise möglich, d.h. die Radbremse des linken Vorderrads und die Radbremse des linken Hinterrads sind dem ersten Bremskreis und die Radbremse des rechten Vorderrads und die Radbremse des rechten Hinterrads sind dem zweiten Bremskreis zugeordnet.

Zudem kann die Hydraulikeinheit für das Pumpensystem, insbesondere bei einer Anordnung des Pumpensystems nach dem ersten Plungersystem, in jedem Bremskreis jeweils eine Saugleitung mit Rückschlagventil aufweisen, welche das Pumpensystem zusätzlich mit dem Fluidbehälter hydraulisch verbinden kann. Der zusätzliche Saugpfad für das Pumpensystem kann anstatt des Plungersystems verwendet werden, um Bremsfluid aus dem Fluidbehälter anzusaugen. Dadurch ergeben sich auch bei Tieftemperaturen keine Probleme während des Ansaugvorgangs.

In vorteilhafter Ausgestaltung des Betriebsverfahrens können im Normalbetrieb zur Druckerhöhung oder zur Druckreduzierung in den Bremskreisen die Absperrventile in den stromlos offenen Zustand überführt werden und der Antrieb des Plungersystems kann angesteuert werden, um die Kolben zur Erhöhung des Drucks in den Bremskreisen in eine erste Richtung zu bewegen oder zur Reduzierung des Drucks in den Bremskreisen in eine der ersten Richtung entgegengesetzte zweite Richtung zu bewegen. Zum Druckhalten in den Bremskreisen können die Absperrventile in den stromlos offenen Zustand überführt werden und der Antrieb des Plungersystems kann die Kolben in ihrer aktuellen Position halten.

In weiterer vorteilhafter Ausgestaltung des Betriebsverfahrens können im Normalbetrieb zur individuellen Druckerhöhung in einer zugeordneten Radbremse das zugehörige Einlassventil geöffnet und das zugehörige Auslassventil geschlossen werden. Zum individuellen Druckhalten in einer zugeordneten Radbremse können das zugehörige Einlassventil und das zugehörige Auslassventil geschlossen werden. Zur individuellen Druckreduzierung in einer zugeordneten Radbremse können das zugehörige Einlassventil geschlossen und das zugehörige Auslassventil geöffnet werden.

In weiterer vorteilhafter Ausgestaltung des Betriebsverfahrens können bei Ausfall des Hauptsystems und einem als zweites Plungersystem ausgeführten zweiten Druckerzeugers zur Druckerhöhung oder zur Druckreduzierung in den Bremskreisen die Absperrventile in den stromlos offenen Zustand überführt werden und der Antrieb des zweiten Plungersystems kann angesteuert werden, um die Kolben zur Erhöhung des Drucks in den Bremskreisen in eine erste Richtung zu bewegen oder zur Reduzierung des Drucks in den Bremskreisen in eine der ersten Richtung entgegengesetzte zweite Richtung zu bewegen. Zum Druckhalten in den Bremskreisen können die Absperrventile in den stromlos offenen Zustand überführt werden und der Antrieb des zweiten Plungersystems kann die Kolben in ihrer aktuellen Position halten.

In weiterer vorteilhafter Ausgestaltung des Betriebsverfahrens können bei Ausfall des Hauptsystems und einem als Pumpensystem ausgeführten zweiten Druckerzeugers zur Druckerhöhung in den Bremskreisen die Absperrventile in den stromlos offenen Zustand überführt und die Druckhalte- und Druckregelventile geschlossen werden, und der Antrieb des zweiten Druckerzeugers kann angesteuert werden, um mittels der Pumpen den Druck zu erhöhen, Zum Druckhalten in den Bremskreisen können die Absperrventile in den stromlos offenen Zustand überführt und die Druckhalte- und Druckregelventile geschlossen werden. Zur Druckreduzierung in den Bremskreisen können die Absperrventile in den stromlos offenen Zustand überführt und die Druckhalte- und Druckregelventile geöffnet werden.

In weiterer vorteilhafter Ausgestaltung des Betriebsverfahrens kann bei einem erkannten Leck in einem Bremskreis das zugehörige Absperrventil geschlossen werden.

Ausführungsbeispiele der Erfindung sind in der Zeichnung dargestellt und werden in der nachfolgenden Beschreibung näher erläutert. In der Zeichnung bezeichnen gleiche Bezugszeichen Komponenten bzw. Elemente, die gleiche bzw. analoge Funktionen ausführen.

Kurze Beschreibung der Zeichnungen
Fig. 1 zeigt ein schematisches Blockdiagramm eines Ausführungsbeispiels eines erfindungsgemäßen mehrkreisigen hydraulisch offenen Bremssystems, insbesondere für ein hochautomatisiertes oder autonomes Fahrzeug.
Fig. 2 zeigt ein schematisches Blockdiagramm eines Ausführungsbeispiels einer hydraulischen Umgehung eines Druckerzeugers des erfindungsgemäßen Bremssystems aus Fig. 1.
Fig. 3 zeigt ein schematisches hydraulisches Schaltbild eines ersten Ausführungsbeispiels eines erfindungsgemäßen mehrkreisigen hydraulisch offenen Bremssystems, insbesondere für ein hochautomatisiertes oder autonomes Fahrzeug.
Fig. 4 zeigt ein schematisches hydraulisches Schaltbild eines zweiten Ausführungsbeispiels eines erfindungsgemäßen mehrkreisigen hydraulisch offenen Bremssystems, insbesondere für ein hochautomatisiertes oder autonomes Fahrzeug.
Fig. 5 zeigt ein schematisches hydraulisches Schaltbild eines dritten Ausführungsbeispiels eines erfindungsgemäßen mehrkreisigen hydraulisch offenen Bremssystems, insbesondere für ein hochautomatisiertes oder autonomes Fahrzeug.
Fig. 6 zeigt ein schematisches hydraulisches Schaltbild eines vierten Ausführungsbeispiels eines erfindungsgemäßen mehrkreisigen hydraulisch offenen Bremssystems, insbesondere für ein hochautomatisiertes oder autonomes Fahrzeug.

### Ausführungsformen der Erfindung

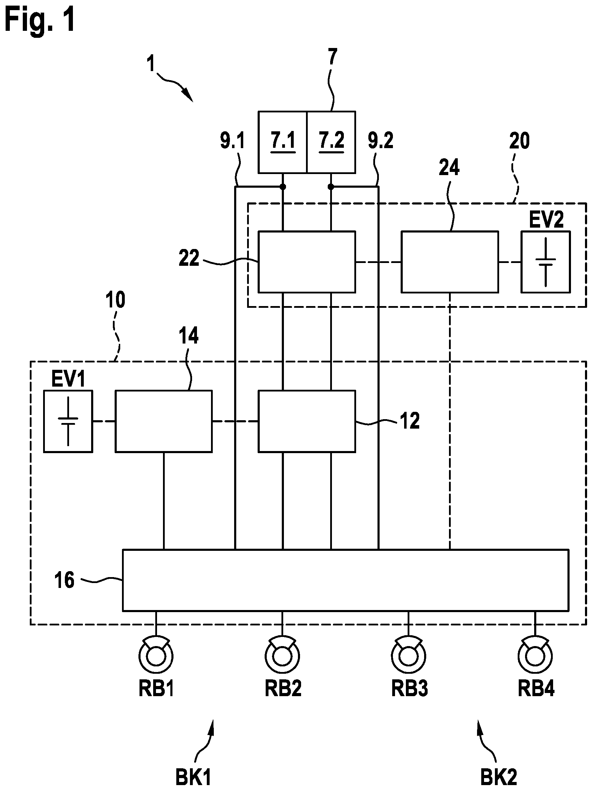

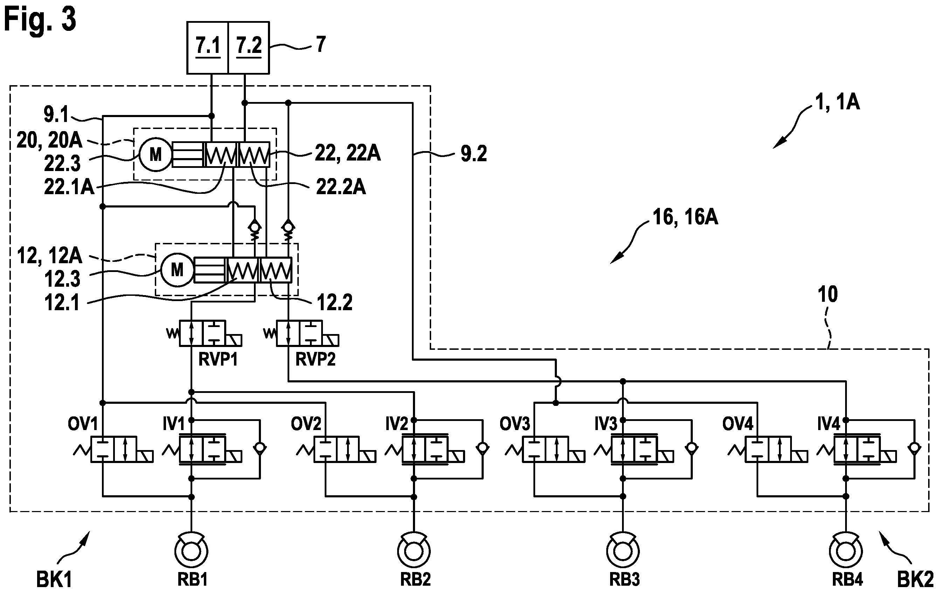

Wie aus Fig. 1 bis 6 ersichtlich ist, umfassen die dargestellten Ausführungsbeispiele eines erfindungsgemäßen mehrkreisigen hydraulisch offenen Bremssystems 1, 1A, 1B, 1C, 1D, insbesondere für ein hochautomatisiertes oder autonomes Fahrzeug, jeweils mindestens zwei Radbremsen RB1, RB2, RB3, RB4, welche jeweils einem Bremskreis BK1, BK2 mit einem Druckablasspfad 9.1, 9.2 zugeordnet sind, zwei mehrkreisige Druckerzeuger 12, 22, welche zwischen einem Fluidbehälter 7 und den mindestens zwei Radbremsen RB1, RB2, RB3, RB4 hydraulisch in Reihe geschaltet sind, und eine Hydraulikeinheit 16 zur hydraulischen Verbindung der Druckerzeuger 12, 22 mit den mindestens zwei Radbremsen RB1, RB2, RB3, RB4 und zur individuellen Bremsdruckmodulation in den mindestens zwei Radbremsen RB1, RB2, RB3, RB4. Wie aus Fig. 3 bis 6 weiter ersichtlich ist, ist ein erster Druckerzeuger 12 als Plungersystem 12A ausgeführt und einem Hauptsystem 10 zugeordnet, welches eine erste Energieversorgung EV1 und eine erste Auswerte- und Steuereinheit 14 umfasst, wie aus Fig. 1 weiter ersichtlich ist. Wie aus Fig. 3 bis 6 weiter ersichtlich ist, ist ein zweiter Druckerzeuger 22 als zweites Plungersystem 22A oder als Pumpensystem 22B ausgeführt und einem Sekundärsystem 20, 20A, 20B zugeordnet, welches eine von der ersten Energieversorgung EV1 unabhängige zweite Energieversorgung EV2 und eine zweite Auswerte- und Steuereinheit 24 umfasst, welche den zweiten Druckerzeuger 22 ansteuert. Komponenten der Hydraulikeinheit 16 zur individuellen Bremsdruckmodulation sind dem Hauptsystem 10 zugeordnet, so dass diese Komponenten der Hydraulikeinheit 16 und der erste Druckerzeuger 12 von der ersten Auswerte- und Steuereinheit 14 angesteuert und von der ersten Energieversorgung EV1 mit Energie versorgt werden.

Wie aus Fig. 1 bis 6 weiter ersichtlich ist, umfassen die dargestellten Bremssysteme 1, 1A, 1B, 1C, 1D jeweils zwei Bremskreise BK1, BK2 mit jeweils einem Druckablasspfad 9.1, 9.2 und vier Radbremsen RB1, RB2, RB3, RB4, wobei eine erste Radbremse RB1 und eine zweite Radbremse RB2 und ein erster Druckablasspfad 9.1 einem ersten Bremskreis BK1 und eine dritte Radbremse RB3 und eine vierte Radbremse RB4 und ein zweiter Druckablasspfad 9.2 einem zweiten Bremskreis zugeordnet sind. Hierbei ist eine X-Aufteilung der Radbremsen RB1, RB2, RB3, RB4 auf die beiden Bremskreise BK1, BK2 möglich, d.h. die erste Radbremse RB1 ist am linken Vorderrad und die zweite Radbremse RB2 ist am rechten Hinterrad und die dritte Radbremse RB2 ist am rechten Vorderrad und die vierte Radbremse RB4 ist am linken Hinterrad angeordnet. Alternativ ist auch eine II-Aufteilung der Radbremsen RB1, RB2, RB3, RB4 auf die beiden Bremskreise BK1, BK2 möglich, d.h. die erste Radbremse RB1 ist am linken Vorderrad und die zweite Radbremse RB2 ist am linken Hinterrad und die dritte Radbremse RB2 ist am rechten Vorderrad und die vierte Radbremse RB4 ist am rechten Hinterrad angeordnet.

Wie aus Fig. 1 bis 6 weiter ersichtlich ist, umfasst der Fluidbehälter 7 in den dargestellten Ausführungsbeispielen des Bremssystems 1, 1A, 1B, 1C, 1D jeweils eine erste Fluidkammer 7.1 zur Fluidversorgung des ersten Bremskreises BK1 und eine zweite Fluidkammer 7.2 zur Fluidversorgung des zweiten Bremskreises BK2.

Wie aus Fig. 3 bis 6 weiter ersichtlich ist, weist das erste Plungersystem 12A in den dargestellten Ausführungsbeispielen des Bremssystems 1, 1A, 1B, 1C, 1D jeweils eine Kolben-Zylindereinheit mit zwei Kolben und zwei Kammern 12.1, 12.2 und mit einem Antrieb 12.3 auf, welcher als Elektromotor ausgeführt ist und die beiden Kolben gegen die Kraft von korrespondierenden Rückstellfedern zur Druckeinstellung in den Kammern 12.1, 12.2 bewegt. Hierbei ist eine erste Kammer 12.1 dem ersten Bremskreis BK1 und eine zweite Kammer 12.2 dem zweiten Bremskreis BK2 zugeordnet. Zudem ist die Kolben-Zylindereinheit im stromlosen Zustand des ersten Druckerzeugers 12 durchfließbar ausgeführt, so dass Bremsfluid durch die beiden Kammern 12.1, 12.2 fließen kann.

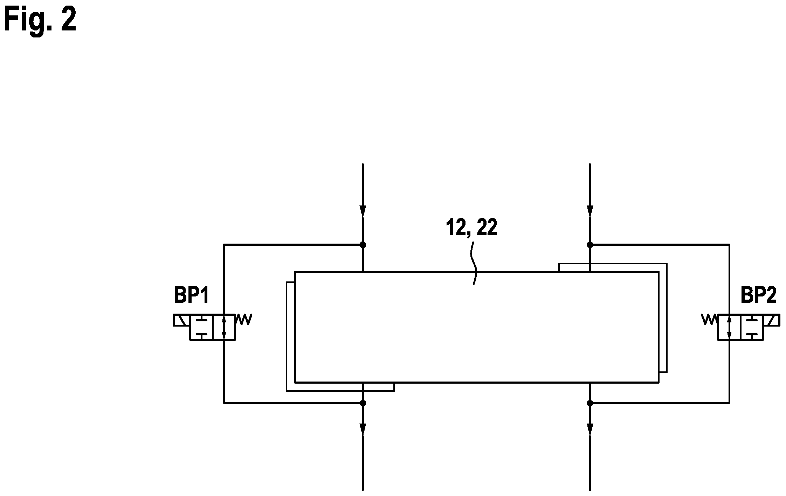

Wie aus Fig. 2 weiter ersichtlich ist, kann in den Bremskreisen BK1, BK2 jeweils parallel zum ersten Druckerzeuger 12 und/oder zum zweiten Druckerzeuger 22 ein hydraulischer By-Pass bzw. eine hydraulische Umgehung ausgebildet werden. Im dargestellten Ausführungsbeispiel sperrt oder gibt jeweils ein erstes Schaltventil BP1 den hydraulischen By-Pass in einem ersten Bremskreis BK1 um den ersten Druckerzeuger 12 und/oder um den zweiten Druckerzeuger 22 frei. Jeweils ein zweites Schaltventil BP2 sperrt oder gibt den hydraulischen By-Pass in einem zweiten Bremskreis BK2 um den ersten Druckerzeuger 12 und/oder um den zweiten Druckerzeuger 22 frei.

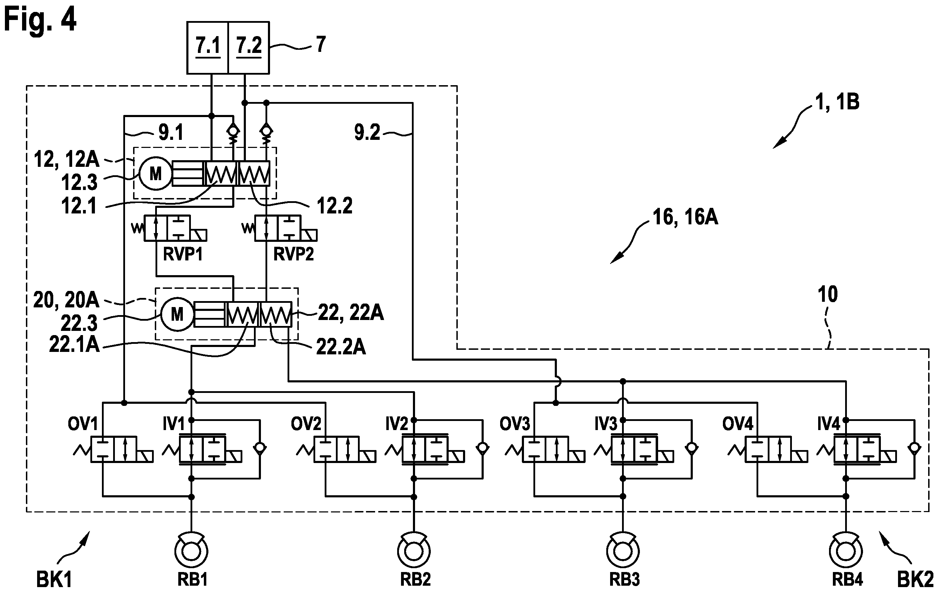

Wie aus Fig. 3 und 4 weiter ersichtlich ist, ist in den dargestellten Ausführungsbeispielen des Bremssystems 1A, 1B der zweite Druckerzeuger 22 als Plungersystem 22A ausgeführt. In den dargestellten Ausführungsbeispielen weist das zweite Plungersystem 22A analog zum ersten Plungersystem 12A eine Kolben-Zylindereinheit mit zwei Kolben und zwei Kammern 22.1A, 22.2A und einen Antrieb 22.3 auf, welcher die beiden Kolben gegen die Kraft von korrespondierenden Rückstellfedern zur Druckeinstellung in den Kammern 22.1A, 22.2A bewegt. Zudem ist eine erste Kammer 22.1A dem ersten Bremskreis BK1 und eine zweite Kammer 22.2A ist dem zweiten Bremskreis BK2 zugeordnet. Die Kolben-Zylindereinheiten des zweiten Plungersystems 22A ist im stromlosen Zustand durchfließbar.

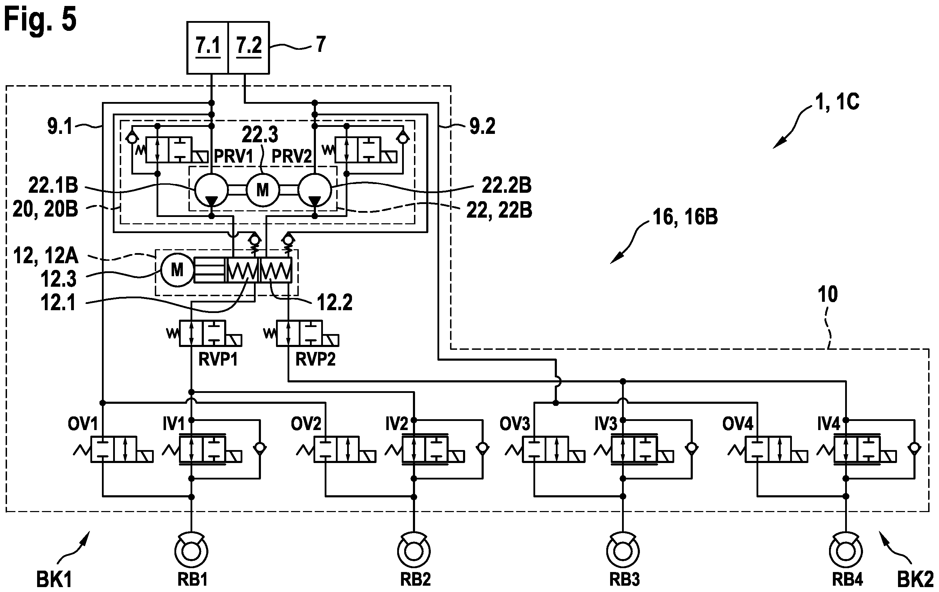

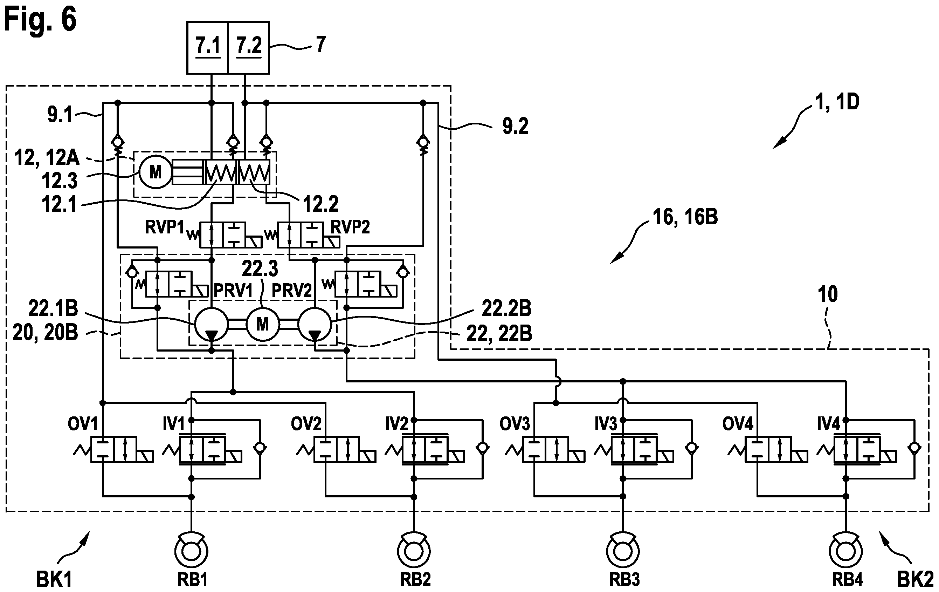

Wie aus Fig. 5 und 6 weiter ersichtlich ist, ist in den dargestellten Ausführungsbeispielen des Bremssystems 1C, 1D der zweite Druckerzeuger 22 als Pumpensystem 22B ausgeführt. Das Pumpensystem umfasst eine erste Pumpe 22.1B, welche dem ersten Bremskreis BK1 zugeordnet ist, eine zweite Pumpe 22.2B, welche dem zweiten Bremskreis BK2 zugeordnet ist, und einen gemeinsamen Antrieb 22.3, welcher die beiden Pumpen 22.1B, 22.2B antreibt.

Wie aus Fig. 3 und 5 weiter ersichtlich ist, ist in den dargestellten Ausführungsbeispielen des Bremssystems 1A, 1C nach dem Fluidbehälter 7 zuerst der zweite Druckerzeuger 22 und dann der erste Druckerzeuger 12 angeordnet.

Wie aus Fig. 4 und 6 weiter ersichtlich ist, ist in den dargestellten Ausführungsbeispielen des Bremssystems 1B, 1D nach dem Fluidbehälter 7 zuerst der erste Druckerzeuger 12 und dann der zweite Druckerzeuger 22 angeordnet.

Wie aus Fig. 3 bis 6 weiter ersichtlich ist, umfasst die Hydraulikeinheit 16 in den dargestellten Ausführungsbeispielen des Bremssystems 1, 1A, 1B, 1C, 1D für jede Radbremse RB1, RB2, RB3, RB4 jeweils ein Einlassventil IV1, IV2, IV3, IV4 und jeweils ein Auslassventil OV1, OV2, OV3, OV4, wobei ein erstes Einlassventil IV1 und ein erstes Auslassventil OV1 der ersten Radbremse RB1 zugeordnet sind. Ein zweites Einlassventil IV2 und ein zweites Auslassventil OV2 sind der zweiten Radbremse RB2 zugeordnet, Ein drittes Einlassventil IV3 und ein drittes Auslassventil OV3 sind der dritten Radbremse RB3 zugeordnet, und ein viertes Einlassventil IV4 und ein viertes Auslassventil OV4 sind der vierten Radbremse RB4 zugeordnet. Zudem umfasst die Hydraulikeinheit 16 für den als Plungersystem 12A ausgeführten ersten Druckerzeuger 12 in jedem Bremskreis BK1, BK2 jeweils ein Absperrventil RVP1, RVP2 und eine zusätzliche Saugleitung mit Rückschlagventil, welche die Kammern 12.1, 12.2 des ersten Plungersystems 12A zusätzlich mit dem Fluidbehälter 7 hydraulisch verbinden. Hierbei ist ein erstes Absperrventil RVP1 dem ersten Bremskreis BK1 zugeordnet, und ein zweites Absperrventil RVP2 ist dem zweiten Bremskreis BK2 zugeordnet. Die Absperrventile RVP1, RVP2 ermöglichen ein Nachladen von Bremsfluid aus dem Fluidbehälter 7. Zu diesem Zweck werden die Absperrventile geöffnet und die Verbindung des ersten Plungersystems 12A zu den Radbremsen RB1, RB2, RB3, RB4 wird unterbrochen. Dann können die Kammern 12.1, 12.2 des ersten Plungersystems 12A mit Bremsfluid aus den Fluidkammern 7.1, 7.2 des Fluidbehälters 7 nachgefüllt werden. Wie aus Fig. 3 und 5 weiter ersichtlich ist, erfolgt das Nachladen bei den dargestellten Ausführungsbeispielen durch den zweiten Druckerzeuger 20 und über die zusätzlichen Saugleitungen. Wie aus Fig. 4 und 6 weiter ersichtlich ist, erfolgt das Nachladen bei den dargestellten Ausführungsbeispielen direkt aus dem Fluidbehälter 7 und über die zusätzlichen Saugleitungen.

Wie aus Fig. 5 und 6 weiter ersichtlich ist, weist die Hydraulikeinheit 16 in den dargestellten Ausführungsbeispielen des Bremssystems 1C, 1D für das Pumpensystem 22B in jedem Bremskreis BK1, BK2 jeweils ein Druckhalte- und Druckregelventil PRV1, PRV2 auf, welche dem Sekundärsystem 20B zugeordnet sind und von der zweiten Auswerte- und Steuereinheit 24 angesteuert und von der zweiten Energieversorgung EV2 mit Energie versorgt werden. Hierbei ist ein erstes Druckhalte- und Druckregelventil PRV1 dem ersten Bremskreis BK1 zugeordnet, und ein zweites Druckhalte- und Druckregelventil PRV2 ist dem zweiten Bremskreis BK2 zugeordnet.

Wie aus Fig. 6 weiter ersichtlich ist, weist die Hydraulikeinheit 16 im dargestellten Ausführungsbeispiel des Bremssystems 1D für das Pumpensystem 22B in jedem Bremskreis BK1, BK2 jeweils eine Saugleitung mit Rückschlagventil auf, welche das Pumpensystem 22B zusätzlich mit dem Fluidbehälter 7 hydraulisch verbindet.

Wie aus Fig. 3 bis 6 weiter ersichtlich ist, sind in den dargestellten Ausführungsbeispielen des Bremssystems 1A, 1B, 1C, 1D die Einlassventile IV1, IV2, IV3, IV4 und die Druckhalte- und Druckregelventile PRV1, PRV2 jeweils als regelbare stromlos offene Magnetventile ausgeführt. Die Auslassventile OV1, OV2, OV3, OV4 und die Absperrventile RVP1, RVP2 sind in den dargestellten Ausführungsbeispielen als elektromagnetische stromlos geschlossene Schaltventile ausgeführt.

Da das erfindungsgemäße Bremssystem 1, 1A, 1B, 1C, 1D als hydraulisch offenes System ausgeführt ist, wird während einer individuellen Bremsdruckmodulation in einer Radbremse RB1, RB2, RB3, RB4 über ein zugeordnetes Auslassventil OV1, OV2, OV3, OV4 abgelassenes Bremsfluid aus den Radbremsen RB1, RB2, RB3, RB4 in den dargestellten Ausführungsbespielen über die Druckablasspfade 9.1, 9.2 in den Fluidbehälter 7 zurückgeführt. In den dargestellten Ausführungsbeispielen des Bremssystems 1A, 1B, 1C, 1D wird das jeweils aus den Radbremsen RB1, RB2 des ersten Bremskreises BK1 über die Auslassventile OV1, OV2 abgelassene Bremsfluid über den ersten Druckablasspfad 9.1 zur ersten Fluidkammer 7.1 des Fluidbehälters 7 zurückgeführt. Das aus den Radbremsen RB3, RB4 des zweiten Bremskreises BK2 über die Auslassventile OV3, OV4 abgelassene Bremsfluid wird über den zweiten Druckablasspfad 9.2 zur zweiten Fluidkammer 7.2 des Fluidbehälters 7 zurückgeführt.

Bei dem erfindungsgemäßen Betriebsverfahren für das oben beschriebene mehrkreisige hydraulisch offene Bremssystem 1, 1A, 1B, 1C, 1D, insbesondere für ein hochautomatisiertes oder autonomes Fahrzeug, erhöht oder reduziert oder hält im Normalbetrieb das Hauptsystem 10 mittels des ersten Druckerzeugers 12 den Druck in den Bremskreisen BK1, BK2 und führt mittels der Hydraulikeinheit 16 die individuelle Bremsdruckmodulation in den mindestens zwei Radbremsen RB1, RB2, RB3, RB4 aus. Bei Ausfall des Hauptsystems 10 erhöht oder reduziert oder hält das Sekundärsystem 20, 20A, 20B mittels des zweiten Druckerzeugers 22 den Druck in den Bremskreisen BK1, BK2 und die individuelle Bremsdruckmodulation in den mindestens zwei Radbremsen RB1, RB2, RB3, RB4 entfällt.

Im Normalbetrieb werden zur Druckerhöhung oder zur Druckreduzierung in den Bremskreisen BK1, BK2 die Absperrventile RVP1, RVP2 in den stromlos offenen Zustand überführt und der Antrieb 12.3 des ersten Plungersystems 12A wird angesteuert wird, um die Kolben zur Erhöhung des Drucks in den Bremskreisen BK1, BK2 in eine erste Richtung zu bewegen oder zur Reduzierung des Drucks in den Bremskreisen BK1, BK2 in eine der ersten Richtung entgegengesetzte zweite Richtung zu bewegen. Zum Druckhalten in den Bremskreisen BK1, BK2 werden die Absperrventile RVP1, RVP2 in den stromlos offenen Zustand überführt und der Antrieb 12.3 des ersten Plungersystems 12A hält die Kolben in ihrer aktuellen Position.

Des Weiteren wird im Normalbetrieb zur individuellen Druckerhöhung in einer zugeordneten Radbremse RB1, RB2, RB3, RB4 das zugehörige Einlassventil IV1, IV2, IV3, IV4 geöffnet und das zugehörige Auslassventil OV1, OV2, OV3, OV4 wird geschlossen. Zum individuellen Druckhalten in einer zugeordneten Radbremse RB1, RB2, RB3, RB4 werden das zugehörige Einlassventil IV1, IV2, IV3, IV4 und das zugehörige Auslassventil OV1, OV2, OV3, OV4 geschlossen. Zur individuellen Druckreduzierung in einer zugeordneten Radbremse RB1, RB2, RB3, RB4 wird das zugehörige Einlassventil IV1, IV2, IV3, IV4 geschlossen und das zugehörige Auslassventil OV1, OV2, OV3, OV4 wird geöffnet.

Bei Ausfall des Hauptsystems 10 und einem als zweites Plungersystem 22A ausgeführten zweiten Druckerzeugers 22 werden zur Druckerhöhung oder zur Druckreduzierung in den Bremskreisen BK1, BK2 die Absperrventile RVP1, RVP2 in den stromlos offenen Zustand überführt und der Antrieb 22.3 des zweiten Plungersystems 12A wird angesteuert, um die Kolben zur Erhöhung des Drucks in den Bremskreisen BK1, BK2 in eine erste Richtung zu bewegen oder zur Reduzierung des Drucks in den Bremskreisen BK1, BK2 in eine der ersten Richtung entgegengesetzte zweite Richtung zu bewegen. Zum Druckhalten in den Bremskreisen BK1, BK2 werden die Absperrventile RVP1, RVP2 in den stromlos offenen Zustand überführt und der Antrieb 22.3 des zweiten Plungersystems 22A hält die Kolben in ihrer aktuellen Position.

Bei Ausfall des Hauptsystems 10 und einem als Pumpensystem 22B ausgeführten zweiten Druckerzeuger 22 werden zur Druckerhöhung in den Bremskreisen BK1, BK2 die Absperrventile RVP1, RVP2 in den stromlos offenen Zustand überführt und die Druckhalte- und Druckregelventile PRV1, PRV2 werden geschlossen und der Antrieb 22.3 des zweiten Druckerzeugers 22 wird angesteuert, um mittels der Pumpen 22.1, 22.2 den Druck zu erhöhen. Zum Druckhalten in den Bremskreisen BK1, BK2 werden die Absperrventile RVP1, RVP2 in den stromlos offenen Zustand überführt und die Druckhalte- und Druckregelventile PRV1, PRV2 werden geschlossen. Zur Druckreduzierung in den Bremskreisen BK1, BK2 werden die Absperrventile RVP1, RVP2 in den stromlos offenen Zustand überführt und die Druckhalte- und Druckregelventile PRV1, PRV2 werden geöffnet.

Außerdem wird bei einem erkannten Leck in einem Bremskreis BK1, BK2 das zugehörige Absperrventil RVP1, RVP2 geschlossen.

Dieses Verfahren kann beispielsweise in Software oder Hardware oder in einer Mischform aus Software und Hardware beispielsweise in einem Steuergerät implementiert sein.

Ausführungsformen der vorliegenden Erfindung stellen ein mehrkreisiges hydraulisch offenes Bremssystem ohne mechanischen und/oder hydraulischen Durchgriff durch den Fahrer, insbesondere für ein hochautomatisiertes oder autonomes Fahrzeug, und ein korrespondierendes Betriebsverfahren zur Verfügung, wobei die eingesetzten hydraulisch in Reihe angeordneten Druckerzeuger durch die hydraulische Verschaltung über die Hydraulikeinheit auf alle Radbremsen des Fahrzeugs wirken.

## Patentansprüche

1. Mehrkreisiges hydraulisch offenes Bremssystem (1), insbesondere für ein hochautomatisiertes oder autonomes Fahrzeug, mit mindestens zwei Radbremsen (RB1, RB2, RB3, RB4), welche jeweils einem Bremskreis (BK1, BK2) mit einem Druckablasspfad (9.1, 9.2) zugeordnet sind, zwei mehrkreisigen Druckerzeugern (12, 22) und einer Hydraulikeinheit (16) zur hydraulischen Verbindung der Druckerzeuger (12, 22) mit den mindestens zwei Radbremsen (RB1, RB2, RB3, RB4) und zur individuellen Bremsdruckmodulation in den mindestens zwei Radbremsen (RB1, RB2, RB3, RB4), wobei ein erster Druckerzeuger (12) als Plungersystem (12A) ausgeführt und einem Hauptsystem (10) zugeordnet ist, welches eine erste Energieversorgung (EV1) und eine erste Auswerte- und Steuereinheit (14) umfasst, wobei ein zweiter Druckerzeuger (22) als zweites Plungersystem (22A) oder als Pumpensystem (22B) ausgeführt und einem Sekundärsystem (20) zugeordnet ist, welches eine von der ersten Energieversorgung (EV1) unabhängige zweite Energieversorgung (EV2) und eine zweite Auswerte- und Steuereinheit (24) umfasst, welche den zweiten Druckerzeuger (22) ansteuert, wobei Komponenten der Hydraulikeinheit (16) zur individuellen Bremsdruckmodulation dem Hauptsystem (10) zugeordnet sind, so dass diese Komponenten der Hydraulikeinheit (16) und der erste Druckerzeuger (12) von der ersten Auswerte- und Steuereinheit (14) angesteuert und von der ersten Energieversorgung (EV1) mit Energie versorgt werden, **dadurch gekennzeichnet, dass** die beiden mehrkreisigen Druckerzeuger (12, 22) zwischen einem Fluidbehälter (7) und den mindestens zwei Radbremsen (RB1, RB2, RB3, RB4) hydraulisch in Reihe geschaltet sind, wobei das Hauptsystem (10) im Normalbetrieb mittels des ersten Druckerzeugers (12) den Druck in den Bremskreisen (BK1, BK2) erhöht oder reduziert oder hält und mittels der Hydraulikeinheit (16) die individuelle Bremsdruckmodulation in den mindestens zwei Radbremsen (RB1, RB2, RB3, RB4) ausführt, wobei das Sekundärsystem (20) bei Ausfall des Hauptsystems (10) mittels des zweiten Druckerzeugers (22) den Druck in den Bremskreisen (BK1, BK2) erhöht oder reduziert oder hält und die individuelle Bremsdruckmodulation in den mindestens zwei Radbremsen (RB1, RB2, RB3, RB4) entfällt.

2. Bremssystem (1) nach Anspruch 1, **dadurch gekennzeichnet, dass** nach dem Fluidbehälter (7) zuerst der erste Druckerzeuger (12) und dann der zweite Druckerzeuger (22) angeordnet ist.

3. Bremssystem (1) nach Anspruch 1, **dadurch gekennzeichnet, dass** der nach dem Fluidbehälter (7) zuerst der zweite Druckerzeuger (22) und dann der erste Druckerzeuger (12) angeordnet ist.

4. Bremssystem (1) nach einem der Ansprüche 1 bis 3, **dadurch gekennzeichnet, dass** in den Bremskreisen (BK1, BK2) jeweils parallel zum ersten Druckerzeuger (12) und/oder zum zweiten Druckerzeuger (22) ein hydraulischer By-Pass ausgebildet ist.

5. Bremssystem (1) nach Anspruch 4, **dadurch gekennzeichnet, dass** jeweils ein erstes Schaltventil (BP1) den hydraulischen By-Pass in einem ersten Bremskreis (BK1) um den ersten Druckerzeuger (12) und/oder um den zweiten Druckerzeuger (22) sperrt oder freigibt, und wobei jeweils ein zweites Schaltventil (BP2) den hydraulischen By-Pass in einem zweiten Bremskreis (BK2) um den ersten Druckerzeuger (12) und/oder um den zweiten Druckerzeuger (22) sperrt oder freigibt.

6. Bremssystem (1) nach einem der Ansprüche 1 bis 5, **dadurch gekennzeichnet, dass** der Fluidbehälter (7) eine erste Fluidkammer (7.1) zur Fluidversorgung des ersten Bremskreises (BK1) und eine zweite Fluidkammer (7.2) zur Fluidversorgung des zweiten Bremskreises (BK2) umfasst.

7. Bremssystem (1) nach Anspruch 1 oder 2, **dadurch gekennzeichnet, dass** das erste Plungersystem (12A) und das zweite Plungersystem (22A) jeweils eine Kolben-Zylindereinheit mit zwei Kolben und zwei Kammern (12.1, 12.2, 22.1A, 22.2A) und mit einem Antrieb (12.3, 22.3) aufweist, wobei der jeweilige Antrieb (12.3, 22.3) jeweils die beiden Kolben des korrespondierenden Plungersystems (12A, 22A) gegen die Kraft von korrespondierenden Rückstellfedern zur Druckeinstellung in den Kammern (12.1, 12.2, 22.1A, 22.2A) bewegt.

8. Bremssystem (1) nach Anspruch 7, **dadurch gekennzeichnet, dass** jeweils eine erste Kammer (12.1, 22.1A) dem ersten Bremskreis (BK1) und jeweils eine zweite Kammer (12.2, 22.2A) dem zweiten Bremskreis (BK2) zugeordnet ist, wobei die Kolben-Zylindereinheiten der Plungersysteme (12A, 22A) im stromlosen Zustand durchfließbar sind.

9. Bremssystem (1) nach einem der Ansprüche 1 bis 8, **dadurch gekennzeichnet, dass** das Pumpensystem (22B) eine erste Pumpe (22.1B), welche dem ersten Bremskreis (BK1) zugeordnet ist, eine zweite Pumpe (22.2B), welche dem zweiten Bremskreis (BK2) zugeordnet ist, und einen gemeinsamen Antrieb (22.3) aufweist, welcher die beiden Pumpen (22.1B, 22.2B) antreibt.

10. Bremssystem (1) nach einem der Ansprüche 1 bis 9, **dadurch gekennzeichnet, dass** die Hydraulikeinheit (16) für jede Radbremse (RB1, RB2, RB3, RB4) zur individuellen Bremsdruckmodulation jeweils ein Einlassventil (IVI, IV2, IV3, IV4) und jeweils ein Auslassventil (OV1, OV2, OV3, OV4) umfasst.

11. Bremssystem (1) nach einem der Ansprüche 7 bis 10, **dadurch gekennzeichnet, dass** die Hydraulikeinheit (16) für das erste Plungersystem (12A) in jedem Bremskreis (BK1, BK2) jeweils ein Absperrventil (RVP1, RVP2) aufweist, welches ein Nachladen von Bremsfluid aus dem Fluidbehälter (7) ermöglicht.

12. Bremssystem (1) nach einem der Ansprüche 11, **dadurch gekennzeichnet, dass** die Hydraulikeinheit (16) für das erste Plungersystem (12A) in jedem Bremskreis (BK1, BK2) jeweils eine Saugleitung mit Rückschlagventil aufweist, welche das erste Plungersystem (12) zusätzlich mit dem Fluidbehälter (7) hydraulisch verbindet.

13. Bremssystem (1) nach einem der Ansprüche 9 bis 11, **dadurch gekennzeichnet, dass** die Hydraulikeinheit (16) für das Pumpensystem (22B) in jedem Bremskreis (BK1, BK2) jeweils ein Druckhalte- und Druckregelventil (PRV1, PRV2) aufweist, welche dem Sekundärsystem (20) zugeordnet sind und von der zweiten Auswerte- und Steuereinheit (24) angesteuert und von der zweiten Energieversorgung (EV2) mit Energie versorgt werden.

14. Bremssystem (1) nach einem der Ansprüche 13, **dadurch gekennzeichnet, dass** die Hydraulikeinheit (16) für das Pumpensystem (22B) in jedem Bremskreis (BK1, BK2) jeweils eine Saugleitung mit Rückschlagventil aufweist, welche das Pumpensystem (22B) zusätzlich mit dem Fluidbehälter (7) hydraulisch verbindet.

15. Betriebsverfahren für ein mehrkreisiges hydraulisch offenes Bremssystem (1), insbesondere für ein hochautomatisiertes oder autonomes Fahrzeug, welches nach zumindest einem der Ansprüche 1 bis 14 ausgeführt ist, **dadurch gekennzeichnet, dass** im Normalbetrieb das Hauptsystem (10) mittels des ersten Druckerzeugers (12) den Druck in den Bremskreisen (BK1, BK2) erhöht oder reduziert oder hält und mittels der Hydraulikeinheit (16) die individuelle Bremsdruckmodulation in den mindestens zwei Radbremsen (RB1, RB2, RB3, RB4) ausführt, wobei bei Ausfall des Hauptsystems (10) das Sekundärsystem (20) mittels des zweiten Druckerzeugers (22) den Druck in den Bremskreisen (BK1, BK2) erhöht oder reduziert oder hält und die individuelle Bremsdruckmodulation in den mindestens zwei Radbremsen (RB1, RB2, RB3, RB4) entfällt.

16. Betriebsverfahren nach Anspruch 15, **dadurch gekennzeichnet, dass** im Normalbetrieb zur Druckerhöhung oder zur Druckreduzierung in den Bremskreisen (BK1, BK2) die Absperrventile (RVP1, RVP2) in den stromlos offenen Zustand überführt werden und der Antrieb (12.3) des ersten Plungersystems (12A) angesteuert wird, um die Kolben zur Erhöhung des Drucks in den Bremskreisen (BK1, BK2) in eine erste Richtung zu bewegen oder zur Reduzierung des Drucks in den Bremskreisen (BK1, BK2) in eine der ersten Richtung entgegengesetzte zweite Richtung zu bewegen, wobei zum Druckhalten in den Bremskreisen (BK1, BK2) die Absperrventile (RVP1, RVP2) in den stromlos offenen Zustand überführt werden und der Antrieb (12.3) des ersten Plungersystems (12A) die Kolben in ihrer aktuellen Position hält..

17. Betriebsverfahren nach Anspruch 15 oder 16, **dadurch gekennzeichnet, dass** im Normalbetrieb zur individuellen Druckerhöhung in einer zugeordneten Radbremse (RB1, RB2, RB3, RB4) das zugehörige Einlassventil (IV1, IV2, IV3, IV4) geöffnet und das zugehörige Auslassventil (OV1, OV2, OV3, OV4) geschlossen wird, wobei zum individuellen Druckhalten in einer zugeordneten Radbremse (RB1, RB2, RB3, RB4) das zugehörige Einlassventil (IV1, IV2, IV3, IV4) und das zugehörige Auslassventil (OV1, OV2, OV3, OV4) geschlossen werden, und wobei zur individuellen Druckreduzierung in einer zugeordneten Radbremse (RB1, RB2, RB3, RB4) das zugehörige Einlassventil (IV1, IV2, IV3, IV4) geschlossen und das zugehörige Auslassventil (OV1, OV2, OV3, OV4) geöffnet werden.

18. Betriebsverfahren nach einem der Ansprüche 15 bis 17, **dadurch gekennzeichnet, dass** bei Ausfall des Hauptsystems (10) und einem als zweites Plungersystem (22A) ausgeführten zweiten Druckerzeugers (22) zur Druckerhöhung oder zur Druckreduzierung in den Bremskreisen (BK1, BK2) die Absperrventile (RVP1, RVP2) in den stromlos offenen Zustand überführt werden und der Antrieb (22.3) des zweiten Plungersystems (12A) angesteuert wird, um die Kolben zur Erhöhung des Drucks in den Bremskreisen (BK1, BK2) in eine erste Richtung zu bewegen oder zur Reduzierung des Drucks in den Bremskreisen (BK1, BK2) in eine der ersten Richtung entgegengesetzte zweite Richtung zu bewegen, wobei zum Druckhalten in den Bremskreisen (BK1, BK2) die Absperrventile (RVP1, RVP2) in den stromlos offenen Zustand überführt werden und der Antrieb (22.3) des zweiten Plungersystems (22A) die Kolben in ihrer aktuellen Position hält.

19. Betriebsverfahren nach einem der Ansprüche 15 bis 18, **dadurch gekennzeichnet, dass** bei Ausfall des Hauptsystems (10) und einem als Pumpensystem (22B) ausgeführten zweiten Druckerzeugers (22) zur Druckerhöhung in den Bremskreisen (BK1, BK2) die Absperrventile (RVP1, RVP2) in den stromlos offenen Zustand überführt und die Druckhalte- und Druckregelventile (PRV1, PRV2) geschlossen und der Antrieb (22.3) des zweiten Druckerzeugers (22) angesteuert wird, um mittels der Pumpen (22.1, 22.2) den Druck zu erhöhen, wobei zum Druckhalten in den Bremskreisen (BK1, BK2) die Absperrventile (RVP1, RVP2) in den stromlos offenen Zustand überführt und die Druckhalte- und Druckregelventile (PRV1, PRV2) geschlossen werden, und wobei zur Druckreduzierung in den Bremskreisen (BK1, BK2) die Absperrventile (RVP1, RVP2) in den stromlos offenen Zustand überführt und die Druckhalte- und Druckregelventile (PRV1, PRV2) geöffnet werden.

20. Betriebsverfahren nach einem der Ansprüche 15 bis 19, **dadurch gekennzeichnet, dass** bei einem erkannten Leck in einem Bremskreis (BK1, BK2) das zugehörige Absperrventil (RVP1, RVP2) geschlossen wird.

## Claims

1. Multi-circuit hydraulically open brake system (1), in particular for a highly automated or autonomous vehicle, having at least two wheel brakes (RB1, RB2, RB3, RB4) which are each assigned to a brake circuit (BK1, BK2) with a pressure discharge path (9.1, 9.2), having two multi-circuit pressure generators (12, 22), and having a hydraulic unit (16) for hydraulic connection of the pressure generators (12, 22) to the at least two wheel brakes (RB1, RB2, RB3, RB4) and for individual brake-pressure modulation in the at least two wheel brakes (RB1, RB2, RB3, RB4), wherein a first pressure generator (12) is in the form of a plunger system (12A) and is assigned to a main system (10), which main system comprises a first energy supply (EV1) and a first evaluation and control unit (14), wherein a second pressure generator (22) is in the form of a second plunger system (22A) or in the form of a pump system (22B) and is assigned to a secondary system (20), which secondary system comprises a second energy supply (EV2), which is independent of the first energy supply (EV1), and a second evaluation and control unit (24), which controls the second pressure generator (22), wherein components of the hydraulic unit (16), for individual brake-pressure modulation, are assigned to the main system (10), so that said components of the hydraulic unit (16) and the first pressure generator (12) are controlled by the first evaluation and control unit (14) and are supplied with energy by the first energy supply (EV1), **characterized in that** the two multi-circuit pressure generators (12, 22) are hydraulically connected in series between a fluid container (7) and the at least two wheel brakes (RB1, RB2, RB3, RB4), wherein the main system (10), during normal operation, by means of the first pressure generator (12), increases or reduces or maintains the pressure in the brake circuits (BK1, BK2) and, by means of the hydraulic unit (16), performs the individual brake-pressure modulation in the at least two wheel brakes (RB1, RB2, RB3, RB4), wherein the secondary system (20), in the event of failure of the main system (10), by means of the second pressure generator (22), increases or reduces or maintains the pressure in the brake circuits (BK1, BK2), and the individual brake-pressure modulation in the at least two wheel brakes (RB1, RB2, RB3, RB4) is not applied.

2. Brake system (1) according to Claim 1, **characterized in that** firstly the first pressure generator (12) and then the second pressure generator (22) is arranged after the fluid container (7).

3. Brake system (1) according to Claim 1, **characterized in that** firstly the second pressure generator (22) and then the first pressure generator (12) is arranged after the fluid container (7).

4. Brake system (1) according to one of Claims 1 to 3, **characterized in that** a hydraulic bypass is formed in the brake circuits (BK1, BK2) in each case parallel to the first pressure generator (12) and/or to the second pressure generator (22).

5. Brake system (1) according to Claim 4, **characterized in that** in each case one first switching valve (BP1) blocks or opens up the hydraulic bypass in a first brake circuit (BK1) around the first pressure generator (12) and/or around the second pressure generator (22), and wherein in each case one second switching valve (BP2) blocks or opens up the hydraulic bypass in a second brake circuit (BK2) around the first pressure generator (12) and/or around the second pressure generator (22).

6. Brake system (1) according to one of Claims 1 to 5, **characterized in that** the fluid container (7) comprises a first fluid chamber (7.1) for supply of fluid to the first brake circuit (BK1) and a second fluid chamber (7.2) for supply of fluid to the second brake circuit (BK2).

7. Brake system (1) according to Claim 1 or 2, **characterized in that** the first plunger system (12A) and the second plunger system (22A) each have a piston/cylinder unit with two pistons and two chambers (12.1, 12.2, 22.1A, 22.2A) and with a drive (12.3, 22.3), wherein the respective drive (12.3, 22.3) in each case moves the two pistons of the corresponding plunger system (12A, 22A) counter to the force of corresponding restoring springs for setting of the pressure in the chambers (12.1, 12.2, 22.1A, 22.2A).

8. Brake system (1) according to Claim 7, **characterized in that** in each case one first chamber (12.1, 22.1A) is assigned to the first brake circuit (BK1) and in each case one second chamber (12.2, 22.2A) is assigned to the second brake circuit (BK2), wherein the piston/cylinder units of the plunger systems (12A, 22A) are able to be flowed through in the electrically deenergized state.

9. Brake system (1) according to one of Claims 1 to 8, **characterized in that** the pump system (22B) has a first pump (22.1B), which is assigned to the first brake circuit (BK1), a second pump (22.2B), which is assigned to the second brake circuit (BK2), and a common drive (22.3), which drives the two pumps (22.1B, 22.2B).

10. Brake system (1) according to one of Claims 1 to 9, **characterized in that**, for each wheel brake (RB1, RB2, RB3, RB4), the hydraulic unit (16) has in each case one inlet valve (IV1, IV2, IV3, IV4) and in each case one outlet valve (OV1, OV2, OV3, OV4) for individual brake-pressure modulation.

11. Brake system (1) according to one of Claims 7 to 10, **characterized in that** the hydraulic unit (16) has for the first plunger system (12A) in each brake circuit (BK1, BK2) in each case one shut-off valve (RVP1, RVP2), which shut-off valve permits recharging of brake fluid from the fluid container (7) .

12. Brake system (1) according to one of Claims 1 to 11, **characterized in that** the hydraulic unit (16) has for the first plunger system (12A) in each brake circuit (BK1, BK2) in each case one suction line with check valve, which suction line hydraulically connects the first plunger system (12) additionally to the fluid container (7).

13. Brake system (1) according to one of Claims 9 to 11, **characterized in that** the hydraulic unit (16) has for the pump system (22B) in each brake circuit (BK1, BK2) in each case one pressure-maintaining and pressure-regulating valve (PRV1, PRV2), which pressure-maintaining and pressure-regulating valves are assigned to the secondary system (20) and are controlled by the second evaluation and control unit (24) and are supplied with energy by the second energy supply (EV2).

14. Brake system (1) according to one of Claims 1 to 13, **characterized in that** the hydraulic unit (16) has for the pump system (22B) in each brake circuit (BK1, BK2) in each case one suction line with check valve, which suction line hydraulically connects the pump system (22B) additionally to the fluid container (7).

15. Operating method for a multi-circuit hydraulically open brake system (1), in particular for a highly automated or autonomous vehicle, which is designed according to at least one of Claims 1 to 14, **characterized in that**, the main system (10), during normal operation, by means of the first pressure generator (12), increases or reduces or maintains the pressure in the brake circuits (BK1, BK2) and, by means of the hydraulic unit (16), performs the individual brake-pressure modulation in the at least two wheel brakes (RB1, RB2, RB3, RB4), wherein, in the event of failure of the main system (10), the secondary system (20), by means of the second pressure generator (22), increases or reduces or maintains the pressure in the brake circuits (BK1, BK2), and the individual brake-pressure modulation in the at least two wheel brakes (RB1, RB2, RB3, RB4) is not applied.

16. Operating method according to Claim 15, **characterized in that**, during normal operation, for increase of pressure or for reduction of pressure in the brake circuits (BK1, BK2), the shut-off valves (RVP1, RVP2) are transferred into the electrically deenergized open state and the drive (12.3) of the first plunger system (12A) is controlled so as to move the pistons in a first direction for increasing the pressure in the brake circuits (BK1, BK2) or to move said pistons in a second direction, opposite the first direction, for reducing the pressure in the brake circuits (BK1, BK2), wherein, for maintenance of pressure in the brake circuits (BK1, BK2), the shut-off valves (RVP1, RVP2) are transferred into the electrically deenergized open state and the drive (12.3) of the first plunger system (12A) keeps the pistons in their present position.

17. Operating method according to Claim 15 or 16, **characterized in that**, during normal operation, for individual increase of pressure in an associated wheel brake (RB1, RB2, RB3, RB4), the associated inlet valve (IV1, IV2, IV3, IV4) is opened and the associated outlet valve (OV1, OV2, OV3, OV4) is closed, wherein, for individual maintenance of pressure in an associated wheel brake (RB1, RB2, RB3, RB4), the associated inlet valve (IV1, IV2, IV3, IV4) and the associated outlet valve (OV1, OV2, OV3, OV4) are closed, and wherein, for individual reduction of pressure in an associated wheel brake (RB1, RB2, RB3, RB4), the associated inlet valve (IV1, IV2, IV3, IV4) is closed and the associated outlet valve (OV1, OV2, OV3, OV4) is opened.

18. Operating method according to one of Claims 15 to 17, **characterized in that**, in the event of failure of the main system (10) and in the case of a second pressure generator (22) in the form of a second plunger system (22A), for increase of pressure or for reduction of pressure in the brake circuits (BK1, BK2), the shut-off valves (RVP1, RVP2) are transferred into the electrically deenergized open state and the drive (22.3) of the second plunger system (12A) is controlled so as to move the pistons in a first direction for increasing the pressure in the brake circuits (BK1, BK2) or to move said pistons in a second direction, opposite the first direction, for reducing the pressure in the brake circuits (BK1, BK2), wherein, for maintenance of pressure in the brake circuits (BK1, BK2), the shut-off valves (RVP1, RVP2) are transferred into the electrically deenergized open state and the drive (22.3) of the second plunger system (22A) keeps the pistons in their present position.

19. Operating method according to one of Claims 15 to 18, **characterized in that**, in the event of failure of the main system (10) and in the case of a second pressure generator (22) in the form of a pump system (22B), for increase of pressure in the brake circuits (BK1, BK2), the shut-off valves (RVP1, RVP2) are transferred into the electrically deenergized open state and the pressure-maintaining and pressure-regulating valves (PRV1, PRV2) are closed and the drive (22.3) of the second pressure generator (22) is controlled so as to increase the pressure by means of the pumps (22.1, 22.2), wherein, for maintenance of pressure in the brake circuits (BK1, BK2), the shut-off valves (RVP1, RVP2) are transferred into the electrically deenergized open state and the pressure-maintaining and pressure-regulating valves (PRV1, PRV2) are closed, and wherein, for reduction of pressure in the brake circuits (BK1, BK2), the shut-off valves (RVP1, RVP2) are transferred into the electrically deenergized open state and the pressure-maintaining and pressure-regulating valves (PRV1, PRV2) are opened.

20. Operating method according to one of Claims 15 to 19, **characterized in that**, in the event of a detected leak in a brake circuit (BK1, BK2), the associated shut-off valve (RVP1, RVP2) is closed.

## Revendications

1. Système de freinage hydraulique ouvert à circuits multiples (1), en particulier pour un véhicule hautement automatisé ou autonome, comprenant au moins deux freins de roue (RB1, RB2, RB3, RB4) qui sont associés respectivement à un circuit de freinage (BK1, BK2) avec un chemin de relâchement de pression (9.1, 9.2), deux générateurs de pression à circuits multiples (12, 22) et une unité hydraulique (16) pour le raccordement hydraulique des générateurs de pression (12, 22) auxdits au moins deux freins de roue (RB1, RB2, RB3, RB4) et pour la modulation individuelle de la pression de freinage dans les au moins deux freins de roue (RB1, RB2, RB3, RB4), dans lequel un premier générateur de pression (12) est réalisé sous la forme d'un système de plongeur (12A) et est associé à un système primaire (10) qui comprend une première alimentation en énergie (EV1) et une première unité d'évaluation et de commande (14), dans lequel un deuxième générateur de pression (22) est réalisé sous la forme d'un deuxième système de plongeur (22A) ou d'un système de pompe (22B) et est associé à un système secondaire (20) qui comprend une deuxième alimentation en énergie (EV2) indépendante de la première alimentation en énergie (EV1) et une deuxième unité d'évaluation et de commande (24) qui pilote le deuxième générateur de pression (22), dans lequel des composants de l'unité hydraulique (16) servant à la modulation individuelle de la pression de freinage sont associés au système primaire (10) de sorte que ces composants de l'unité hydraulique (16) et le premier générateur de pression (12) sont pilotés par la première unité d'évaluation et de commande (14) et sont alimentés en énergie par la première alimentation en énergie (EV1),
**caractérisé en ce que** les deux générateurs de pression à circuits multiples (12, 22) sont connectés hydrauliquement en série entre un réservoir de fluide (7) et les au moins deux freins de roue (RB1, RB2, RB3, RB4), dans lequel le système primaire (10) en fonctionnement normal augmente ou réduit ou maintient la pression dans les circuits de freinage (BK1, BK2) au moyen du premier générateur de pression (12) et exécute au moyen de l'unité hydraulique (16) la modulation individuelle de la pression de freinage dans les au moins deux freins de roue (RB1, RB2, RB3, RB4), dans lequel le système secondaire (20), en cas de défaillance du système primaire (10), augmente ou réduit ou maintient la pression dans les circuits de freinage (BK1, BK2) au moyen du deuxième générateur de pression (22), et la modulation individuelle de la pression de freinage dans les au moins deux freins de roue (RB1, RB2, RB3, RB4) est omise.

2. Système de freinage (1) selon la revendication 1, **caractérisé en ce que** d'abord le premier générateur de pression (12) et ensuite le deuxième générateur de pression (22) sont disposés après le réservoir de fluide (7).

3. Système de freinage (1) selon la revendication 1, **caractérisé en ce que** d'abord le deuxième générateur de pression (22) et ensuite le premier générateur de pression (12) sont disposés après le réservoir de fluide (7).

4. Système de freinage (1) selon l'une quelconque des revendications 1 à 3, **caractérisé en ce qu'**une dérivation hydraulique est réalisée dans les circuits de freinage (BK1, BK2), respectivement en parallèle au premier générateur de pression (12) et/ou au deuxième générateur de pression (22).

5. Système de freinage (1) selon la revendication 4, **caractérisé en ce que** respectivement une première soupape de commutation (BP1) bloque ou débloque la dérivation hydraulique dans un premier circuit de freinage (BK1) autour du premier générateur de pression (12) et/ou autour du deuxième générateur de pression (22), et dans lequel respectivement une deuxième soupape de commutation (BP2) bloque ou débloque la dérivation hydraulique dans un deuxième circuit de freinage (BK2) autour du premier générateur de pression (12) et/ou autour du deuxième générateur de pression (22) .

6. Système de freinage (1) selon l'une quelconque des revendications 1 à 5, **caractérisé en ce que** le réservoir de fluide (7) comprend une première chambre de fluide (7.1) pour l'alimentation en fluide du premier circuit de freinage (BK1) et une deuxième chambre de fluide (7.2) pour l'alimentation en fluide du deuxième circuit de freinage (BK2).

7. Système de freinage (1) selon la revendication 1 ou 2, **caractérisé en ce que** le premier système de plongeur (12A) et le deuxième système de plongeur (22A) présentent respectivement un ensemble piston/cylindre pourvu de deux pistons et de deux chambres (12.1, 12.2, 22.1A, 22.2A) et d'un entraînement (12.3, 22.3), l'entraînement respectif (12.3, 22.3) déplaçant respectivement les deux pistons du système de plongeur (12A, 22A) correspondant contre la force de ressorts de rappel correspondants pour régler la pression dans les chambres (12.1, 12.2, 22.1A, 22.2A).

8. Système de freinage (1) selon la revendication 7, **caractérisé en ce que** respectivement une première chambre (12.1, 22.1A) est associée au premier circuit de freinage (BK1) et respectivement une deuxième chambre (12.2, 22.2A) est associée au deuxième circuit de freinage (BK2), dans lequel les ensembles piston/cylindre des systèmes de plongeur (12A, 22A) peuvent être traversés à l'état hors tension.

9. Système de freinage (1) selon l'une quelconque des revendications 1 à 8, **caractérisé en ce que** le système de pompe (22B) présente une première pompe (22.1B) qui est associée au premier circuit de freinage (BK1), une deuxième pompe (22.2B) qui est associée au deuxième circuit de freinage (BK2), et un entraînement commun (22.3) qui entraîne les deux pompes (22.1B, 22.2B).

10. Système de freinage (1) selon l'une quelconque des revendications 1 à 9, **caractérisé en ce que** l'unité hydraulique (16) comprend pour chaque frein de roue (RB1, RB2, RB3, RB4) pour la modulation individuelle de la pression de freinage respectivement une soupape d'entrée (IV1, IV2, IV3, IV4) et respectivement une soupape de sortie (OV1, OV2, OV3, OV4).

11. Système de freinage (1) selon l'une quelconque des revendications 7 à 10, **caractérisé en ce que** l'unité hydraulique (16) présente pour le premier système de plongeur (12A) dans chaque circuit de freinage (BK1, BK2) respectivement une soupape d'arrêt (RVP1, RVP2) qui permet une recharge en fluide de freinage à partir du réservoir de fluide (7).

12. Système de freinage (1) selon l'une quelconque des revendications 1 à 11, **caractérisé en ce que** l'unité hydraulique (16) pour le premier système de plongeur (12A) dans chaque circuit de freinage (BK1, BK2) présente respectivement une conduite d'aspiration pourvue d'une soupape de retenue qui relie hydrauliquement le premier système de plongeur (12) en plus au réservoir de fluide (7).

13. Système de freinage (1) selon l'une quelconque des revendications 9 à 11, **caractérisé en ce que** l'unité hydraulique (16) pour le système de pompe (22B) présente dans chaque circuit de freinage (BK1, BK2) respectivement une soupape de maintien et de régulation de la pression (PRV1, PRV2) qui sont associées au système secondaire (20) et sont pilotées par la deuxième unité d'évaluation et de commande (24) et alimentées en énergie par la deuxième alimentation en énergie (EV2).

14. Système de freinage (1) l'une quelconque des revendications 1 à 13, **caractérisé en ce que** l'unité hydraulique (16) pour le système de pompe (22B) présente dans chaque circuit de freinage (BK1, BK2) respectivement une conduite d'aspiration pourvue d'une soupape de retenue qui relie hydrauliquement le système de pompe (22B) en plus au réservoir de fluide (7).

15. Procédé d'exploitation pour un système de freinage hydraulique ouvert à circuits multiples (1), en particulier pour un véhicule hautement automatisé ou autonome, qui est réalisé selon au moins l'une des revendications 1 à 14,
**caractérisé en ce qu'**en fonctionnement normal, le système primaire (10) augmente ou réduit ou maintient la pression dans les circuits de freinage (BK1, BK2) au moyen du premier générateur de pression (12) et exécute la modulation individuelle de la pression de freinage dans les au moins deux freins de roue (RB1, RB2, RB3, RB4) au moyen de l'unité hydraulique (16), dans lequel, en cas de défaillance du système primaire (10), le système secondaire (20) augmente ou réduit ou maintient la pression dans les circuits de freinage (BK1, BK2) au moyen du deuxième générateur de pression (22), et la modulation individuelle de la pression de freinage dans les au moins deux freins de roue (RB1, RB2, RB3, RB4) est omise.

16. Procédé d'exploitation selon la revendication 15, **caractérisé en ce qu'**en fonctionnement normal, pour l'augmentation ou la réduction de la pression dans les circuits de freinage (BK1, BK2), les soupapes d'arrêt (RVP1, RVP2) sont mises à l'état ouvert hors tension, et l'entraînement (12.3) du premier système de plongeur (12A) est piloté pour déplacer les pistons afin d'augmenter la pression dans les circuits de freinage (BK1, BK2) dans une première direction ou pour réduire la pression dans les circuits de freinage (BK1, BK2) dans une deuxième direction opposée à la première direction, dans lequel, pour maintenir la pression dans les circuits de freinage (BK1, BK2), les soupapes d'arrêt (RVP1, RVP2) sont mises à l'état ouvert hors tension, et l'entraînement (12.3) du premier système de plongeur (12A) maintient les pistons dans leur position actuelle.

17. Procédé d'exploitation selon la revendication 15 ou 16, **caractérisé en ce qu'**en fonctionnement normal, pour l'augmentation individuelle de la pression dans un frein de roue (RB1, RB2, RB3, RB4) associé, la soupape d'entrée associée (IV1, IV2, IV3, IV4) est ouverte, et la soupape de sortie associée (OV1, OV2, OV3, OV4) est fermée, dans lequel, pour le maintien individuel de la pression dans un frein de roue (RB1, RB2, RB3, RB4) associé, la soupape d'entrée associée (IV1, IV2, IV3, IV4) et la soupape de sortie associée (OV1, OV2, OV3, OV4) sont fermées, et dans lequel, pour la réduction individuelle de la pression dans un frein de roue associé (RB1, RB2, RB3, RB4), la soupape d'entrée associée (IV1, IV2, IV3, IV4) est fermée et la soupape de sortie associée (OV1, OV2, OV3, OV4) est ouverte.

18. Procédé d'exploitation selon l'une quelconque des revendications 15 à 17, **caractérisé en ce que** dans le cas d'une défaillance du système primaire (10) et avec un deuxième générateur de pression (22) réalisé comme un deuxième système de plongeur (22A), pour augmenter ou réduire la pression dans les circuits de freinage (BK1, BK2), les soupapes d'arrêt (RVP1, RVP2) sont mises à l'état ouvert hors tension et l'entraînement (22.3) du deuxième système de plongeur (12A) est piloté pour déplacer les pistons afin d'augmenter la pression dans les circuits de freinage (BK1, BK2) dans une première direction, ou pour réduire la pression dans les circuits de freinage (BK1, BK2), pour les déplacer dans une deuxième direction opposée à la première direction, dans lequel pour maintenir la pression dans les circuits de freinage (BK1, BK2), les soupapes d'arrêt (RVP1, RVP2) sont mises à l'état ouvert hors tension, et l'entraînement (22.3) du deuxième système de plongeur (22A) maintient les pistons dans leur position actuelle.

19. Procédé d'exploitation selon l'une quelconque des revendications 15 à 18, **caractérisé en ce que** dans le cas d'une défaillance du système primaire (10) et avec un deuxième générateur de pression (22) réalisé comme un système de pompe (22B), pour augmenter la pression dans les circuits de freinage (BK1, BK2), les soupapes d'arrêt (RVP1, RVP2) sont mises à l'état ouvert hors tension, et les soupape de maintien et de régulation de la pression (PRV1, PRV2) sont fermées, et l'entraînement (22.3) du deuxième générateur de pression (22) est piloté pour augmenter la pression au moyen des pompes (22.1, 22.2), dans lequel, pour maintenir la pression dans les circuits de freinage (BK1, BK2), les soupapes d'arrêt (RVP1, RVP2) sont mises à l'état ouvert hors tension, et les soupapes de maintien et de régulation de la pression (PRV1, PRV2) sont fermées, et dans lequel, pour réduire la pression dans les circuits de freinage (BK1, BK2), les soupapes d'arrêt (RVP1, RVP2) sont mises à l'état ouvert hors tension, et les soupapes de maintien et de régulation de la pression (PRV1, PRV2) sont ouvertes.

20. Procédé d'exploitation selon l'une quelconque des revendications 15 à 19, **caractérisé en ce que** la soupape d'arrêt associée (RVP1, RVP2) est fermée si une fuite est identifiée dans un circuit de freinage (BK1, BK2).
